# EUROPÄISCHE PATENTSCHRIFT

(11) **EP 0 907 534 B1**
(45) Veröffentlichungstag und Bekanntmachung des Hinweises auf die Patenterteilung: **20.12.2000**
(21) Anmeldenummer: 97927177.2
(22) Anmeldetag: 12.06.1997
(51) Int. Cl.: B60T 8/44, B60T 8/48

(54) **HYDRAULISCHE BREMSANLAGE UND VERFAHREN ZU DEREN BETRIEB**
HYDRAULIC BRAKING SYSTEM AND OPERATING METHOD
SYSTEME DE FREINAGE HYDRAULIQUE ET SA METHODE DE FONCTIONNEMENT

(30) Priorität: 01.07.1996 DE 19626294; 09.08.1996 DE 19632130
(43) Veröffentlichungstag der Anmeldung: 14.04.1999
(73) Patentinhaber: Continental Teves AG & Co. oHG, 60488 Frankfurt (DE)
(72) Erfinder: BECK, Erhard, D-35781 Weilburg (DE); VOLZ, Peter, D-64291 Darmstadt (DE)
(74) Vertreter: Blum, Klaus-Dieter
(86) Internationale Anmeldenummer: EP9703074
(87) Internationale Veröffentlichungsnummer: WO9800321

(56) Entgegenhaltungen:
- DE-A- 4 037 468
- DE-A- 4 110 851
- DE-A- 4 128 091
- DE-A- 4 436 913
- DE-A- 4 446 525
- DE-C- 4 329 140
- GB-A- 2 147 963

## Beschreibung

Die Erfindung bezieht sich auf eine hydraulische Bremsanlage und ein Verfahren zu deren Betrieb gemäß dem Oberbegriff des Anspruchs 1 bzw. 8.

Eine derartige Bremsanlage ist aus der DE 41 108 51 A1 bekannt. Die Bremskreise, die an den Hauptbremszylinder angeschlossen sind, enthalten Mittel (Rückförderpumpen, Ventile), die mittels eines elektronischen Reglers angesteuert werden. Je nachdem, welcher Regelalgorithmus in dem elektronischen Regler implementiert ist, kann mit einer solchen Anlage z.B. ein Blockieren der Räder während eines durch den Fahrer eingeleiteten Bremsvorganges verhindert werden. In der erwähnten Offenlegungsschrift wird außerdem vorgeschlagen, die hydraulische Bremsanlage einzusetzen, um ein Durchdrehen der angetriebenen Räder mittels eines entsprechenden Antriebsschlupfreglers zu verhindern.

Um eine solche Regelung durchführen zu können, muß die Anlage mit Mitteln ausgestattet werden, die in der Lage sind, zumindest den Bremskreis, der die angetriebenen Räder enthält, mit Druckmittel zu füllen. Dazu ist eine Vorladepumpe vorgesehen, die aus dem Vorratsbehälter des Hauptbremszylinders in einem Nachlaufraum des Hauptbremszylinders fördert, der über ein Zentralventil mit der Arbeitskammer und damit mit einem Bremskreis der Anlage in Verbindung steht.

Zur Durchführung einer Antriebsschlupfregelung wird zunächst mittels der Vorladepumpe in den angeschlossenen Bremskreisen ein Bremsdruck aufgebaut, wodurch das Rad, das zum Durchdrehen neigt, abgebremst wird.

Ähnliche Bremsanlagen werden auch eingesetzt, um an allen vier Rädern eines Fahrzeuges Bremskräfte aufzubauen, die jeweils radindividuell eingestellt werden, so daß gezielt Momente um die Hochachse des Fahrzeuges aufgebaut werden können, die das Fahrzeug in kritischen Fahrsituationen stabil halten sollen.

In der GB 21 47 963 A1 ist ebenfalls eine Bremsanlage mit einer Vorladepumpe beschrieben, mit der sowohl eine Antiblokkierregelung als auch eine Antriebsschlupfregelung durchgeführt werden kann. Die hydraulische Schaltung ist aber so aufgebaut, daß die Pumpe nicht unmittelbar in die Bremskreise fördert, sondern Druckmittel an der Saugseite der Rückförderpumpe zur Verfügung stellt, die diese weiter in die Bremskreise leitet, damit dort ein Bremsdruck aufgebaut werden kann.

In beiden beschriebenen Fällen ist dem Hauptzylinder ein Bremskraftverstärker vorgeschaltet, der die auf den Hauptbremszylinder ausgeübte Pedalkraft verstärkt. Derartige Verstärker sind notwendig, da nicht in allen Fällen davon ausgegangen werden kann, daß der Fahrer oder die Fahrerin allein die notwendigen Betätigungskräfte für eine Bremsung aufbringen kann. Zum Einsatz kommen im allgemeinen entweder sogenannte pneumatische oder hydraulische Verstärker. Die pneumatischen Verstärker nutzen zu ihrem Antrieb den Druckunterschied zwischen der Atmosphäre und dem Druck im Ansaugbereich eines Verbrennungsmotors. Da der Druckunterschied sehr klein ist, muß die wirksame Fläche des Verstärkers sehr groß gewählt werden, was zur Folge hat, daß diese einen relativ großen Raum im Motorraum einnehmen.

Dieses Problem tritt bei hydraulischen Verstärkern nicht auf, da diese mit einem hydraulischen Hochdruckspeicher versehen sind. Diese Verstärker sind allerdings recht aufwendig zu bauen, da besondere Sicherheitserfordernisse erfüllt werden müssen. Außerdem muß das Regelventil des Verstärkers sehr feinfühlig arbeiten, so daß es im allgemeinem sehr aufwendig konstruiert ist.

Die Erfindung beruht daher auf der Aufgabe, für einen pedalbetätigten Bremsdruckgeber in einer hydraulischen Bremsanlage gemäß dem Oberbegriff des Anspruchs 1 eine effektive Pedalkraftverstärkung vorzusehen. Dazu schlägt die Erfindung vor, daß die Pumpe eine Vorladepumpe ist, und daß die Vorladepumpe zur Verstärkung der Pedalkraft spätestens mit Beginn einer Pedalbetätigung eingeschaltet wird, wobei der auf die Wirkfläche einwirkende Vorladepumpendruck eine Pedalkraftverstärkung erzeugt. Durch die Erfindung ist es damit möglich, den Hauptbremszylinder als hydraulischen Bremsassistenten wirksam werden zu lassen.

Diese hydraulische Bremsassistentenfunktion wird durch einen Rechner, vorzugsweise einem ABS-Steuergerät, gesteuert. Der Rechner verarbeitet hierzu als Eingangssignale die Bewegungscharakteristik des Bremspedals, welche vorzugsweise mit einem Weg- oder Kraftsensor ermittelt wird, den Hydraulikdruck im Bremssystem, welcher mit Drucksensoren erfaßt wird, und vergleicht die Weg- und Druckcharakteristik mit den Signalen welche die Fahrzeuggeschwindigkeit darstellen. Erkennt der Rechner aus diesem Informationsvergleich eine Panikbremsung, aktiviert er Vorladepumpe und Vorladeventil und setzt damit die Bremsassistentenfunktion des Hauptbremszylinders in Gang.

Die Vorladepumpe erfüllt zwei Zwecke. Aus der DE 4037468A ist ein System bekannt, mit dem versucht wird, aufgrund des Verhaltens des Fahrers (rasches Lösen des Gaspedals, schnelle Bewegung des rechten Fußes auf das Bremspedal zu) schon vor der eigentlichen Pedalbetätigung auf eine beabsichtigte Bremsbetätigung zu schließen. Wenn dies möglich ist, kann in dieser Vorbremsphase die Vorladepumpe eingeschaltet werden, so daß die Bremskreise schon so weit gefüllt werden können, daß Leerwege ausgeglichen sind, bevor der Fahrer das Pedal niederdrückt. Dies hat den Vorteil, daß mit Betätigen des Pedals sofort ein Bremsdruck aufgebaut werden kann, ohne daß zunächst Leerwege durchfahren werden müssen.

In einem zweiten Schritt erfüllt die Vorladepumpe eine echte Verstärkerfunktion. Sie erzeugt im Nachlaufraum einen Bremsdruck, der auf eine wirksame Fläche des Druckstangenkolbens des Hauptzylinders geleitet wird. Die wirksame Fläche entsteht, weil der Durchmesser des Druckstangenkolbens größer ist als des Schaftes des Druckstangenkolbens, der durch die Endabdichtung des Hauptzylinders geführt ist. Damit wird zusätzlich eine Kraft auf den Druckstangenkolben ausgeübt, der sich aus der Größe der wirksamen Fläche und dem von der Vorladepumpe aufgebauten Druck ergibt. Dies wiederum hat zur Folge, daß der üblicherweise vorgeschaltete pneumatische Verstärker eine nicht so große wirksame Fläche aufzuweisen braucht, und damit kleiner baut. Unter Umständen kann sogar ganz auf einen zusätzlichen Verstärker verzichtet werden. Um zu vermeiden, daß in der Verstärkerphase Druckmittel, das von der Pumpe gefördert wird, in den Bremskreis gelangt, kann ein Druckbegrenzungsventil vorgesehen werden, dessen Öffnungsdruck vom Hauptzylinderdruck bestimmt wird. Der Druck im Nachlaufraum ist damit stets kleiner als der Druck in der Arbeitskammer des Hauptzylinders, so daß über die Rückschlagmanschetten am Druckstangenkolben kein Druckmittel von der Nachlaufkammer in die Arbeitskammer fließen kann. Der Druchaufbau in der Nachlaufkammer kann proportional zur aufgebrachten Fußkraft erfolgen. In diesem Fall liegt eine Verstärkerfunktion vor. Der Aufbau kann aber auch überproportional bis zur Vollausteuerung erfolgen. In diesem Fall liegt eine Bremsassistenzfunktion vor, mit der es möglich ist das Fahrzeug in bestimmten Situationen über das Maß hinaus zu verzögern, das vom Fahrer durch die Pedalbetätigung vorgegeben ist.

Die Besonderheit der vorgeschlagenen Bremsanlage besteht somit darin, daß die Vorladepumpe sowohl eingesetzt wird, um Druckmittel in den Fällen zur Verfügung zu stellen, in denen keine Pedalbetätigung erfolgt, als auch Druckmittel zur Verfügung zu stellen, um eine Verstärkerfunktion bzw. Bremsassistenzfunktion zu realisieren.

Die Vorladepumpe kann, wie z. B. in der GB 21 47 963 A1 in den einzigen Verbindungspfad zwischen dem Vorratsbehälter und Arbeitskammer geschaltet werden. Dies setzt aber voraus, daß die Pumpe im ausgeschalteten Zustand in beiden Richtungen durchströmt werden kann. Die Pumpe kann aber auch erfindungsgemäß parallel zu einem Sperrventil (Vorladeventil) geschaltet werden, daß in einem Parallelzweig den Nachlaufraum mit dem Vorratsbehälter verbindet. Dieses Sperrventil wird geschlossen, sobald die Pumpe eingeschaltet wird. Dieses Ventil kann auch getaktet angesteuert dazu eingesetzt werden, den Druck der Vorladepumpe zu regulieren.

Im folgenden wird die Erfindung anhand mehrerer Ausführungsbeispiele näher erläutert. Dazu zeigt die
- Fig. 1: den hydraulischen Schaltplan einer nicht beanspruchten hydraulischen Bremsanlage.
- Fig. 2: zeigt ebenfalls in schematischer Darstellung den erfindungsgemäßen Anschluß einer Vorladepumpe an einen Hauptbremszylinder.
- Fig. 3: zeigt die Ausführung eines geeigneten Hauptbremszylinders.
- Fig. 4-7: Merkmale zur Ansteuerung einer erfindungsgemäßen hydraulischen Bremsanlage mit hydraulischen Bremsassistenten.

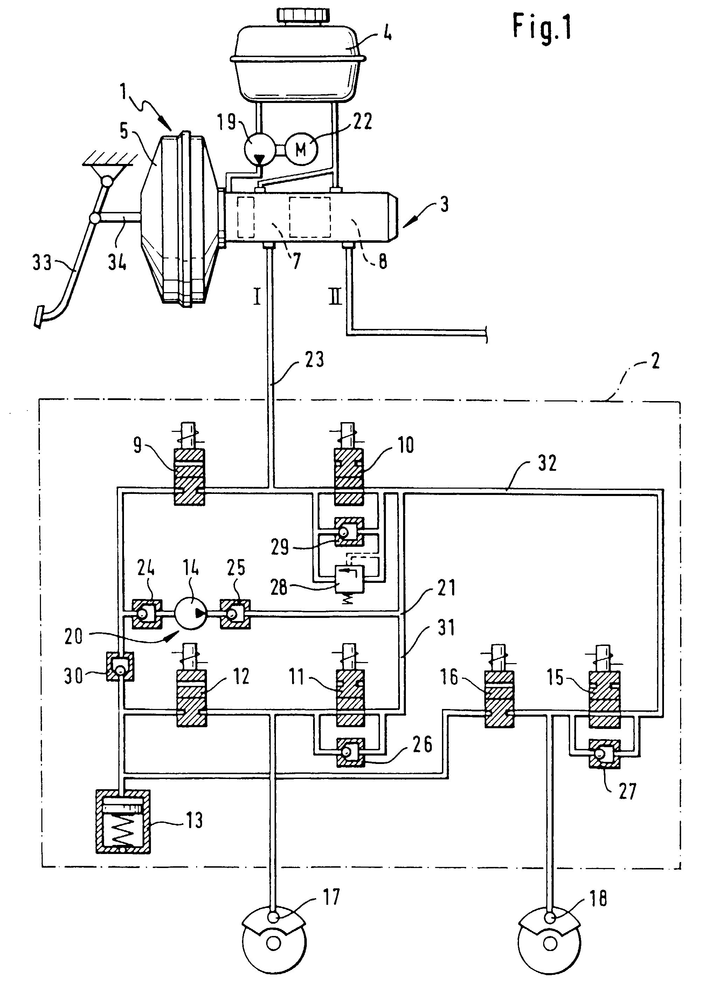

Die in Fig.1 dargestellte Bremsanlage weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus einem Bremsdruckgeber 1, an den über nicht näher bezeichnete hydraulische Leitungen Radbremszylinder 17,18 anschließbar sind, einem zwischen dem Bremsdruckgeber 1 und den Radbremsen geschalteten Hydroaggregat 2, sowie einem nicht gezeigten elektronischen Regler mit zugehöriger Sensorik. Die Zuordnung der Radbremszylinder 17,18 den einzelnen Bremskreisen I, II ist derart getroffen, daß der eine Radbremszylinder 17 entweder einem Rad einer Fahrzeugachse und der andere Radbremszylinder 18 dem diagonal gegenüberliegenden Rad der anderen Fahrzeugachse zugeordnet ist (diagonale Aufteilung der Bremskreise) oder aber beide Radbremszylinder 17, 18 derselben Fahrzeug-achse, wie gezeigt, zugeordnet sind (Schwarzweiß-Aufteilung der Bremskreise).

Der vom Fahrer des Kraftfahrzeugs mittels eines Bremspedals 33 betätigbare Druckgeber 1 besteht aus einem pneumatischen Bremskraftverstärker 5, dem ein Hauptbremszylinder, vorzugsweise ein Tandemhauptzylinder 3 nachgeschaltet ist, dessen Druckräume 7,8 mit einem Druckmittelvorratsbehälter 4 verbindbar sind. An das Bremspedal 33 ist eine Betätigungsstange 34 angekoppelt, die eine Betätigung eines nicht dargestellten Steuerventils durch den Fahrzeugfahrer ermöglicht, das den Aufbau eines pneumatischen Differenzdruckes im Gehäuse des Unterdruckbremskraftverstärkers 5 steuert.

Das Hydroaggregat 2 weist ein Motor-Pumpen-Aggregat 20 auf, das aus einer durch einen nicht gezeigten Elektromotor angetriebenen hydraulischen Rückförderpumpe 14 besteht, deren Saugseite über ein erstes Rückschlagventil 24 sowie ein elektromagnetisch betätigbares Schaltventil 9 an den ersten Druckraum 7 des Hauptbremszylinders 3 angeschlossen ist. Von der Druckseite der Rückförderpumpe 14 strömt das Druckmittel über ein zweites Rückschlagventil 25 und eine nicht gezeigte Dämpfungskammer zu einem hydraulischen Knotenpunkt 21. An diesen angeschlossen ist sowohl ein zum ersten Radbremszylinder 17 führender Leitungsabschnitt 31 als auch ein zum zweiten Radbremszylinder 18 führenden Leitungsabschnitt 32. Eine hydraulische Leitung 23 verbindet die Druckseite der Rückförderpumpe 14 mit dem Tandemhauptzylinder 3. Außerdem ist zwischen dem Knotenpunkt 21 und dem Hauptbremszylinder 3 ein vorzugsweise elektromagnetisch betätigbares Trennventil 10 geschaltet, dem sowohl ein drittes Rückschlagventil 29 als auch ein Druckbegrenzungsventil 28 parallelgeschaltet sind. Zur Modulation des im ersten Radbremszylinder 17 eingesteuerten Drucks dienen eine Parallelschaltung eines Einlaß- (11) mit einem vierten Rückschlagventil 26 sowie ein Auslaßventil 12, wobei die erwähnte Parallelschaltung im Leitungsabschnitt 31 eingefügt ist und das Auslaßventil 12 zum Zwecke eines Radbremsdruckabbaus eine Verbindung zwischen dem ersten Radbremszylinder 17 und einem Niederdruckspeicher 13 ermöglicht, der über ein fünftes Rückschlagventil 30 mit der Saugseite der Rückförderpumpe 14 verbunden ist.

Um in dem zum betrachteten Bremskreis gehörenden zweiten Radbremszylinder 18 analog zum bereits betrachteten Radbremszylinder 17 den darin eingesteuerten hydraulischen Druck regulieren zu können, sind eine zweite Parallelschaltung eines zweiten Einlaß- (15) mit einem sechsten Rückschlagventil 27 sowie ein zweites Auslaßventil 16 vorgesehen, wobei die erwähnte Parallelschaltung im Leitungsabschnitt 32 eingefügt ist und das Auslaßventil 16 zum Zwecke eines Radbremsdruckabbaus eine Verbindung zwischen dem zweiten Radbremszylinder 18 und dem Niederdruckspeicher 13 herstellt.

Um im Bedarfsfall, beispielsweise bei sehr niedrigen Temperaturen, der Rückförderpumpe 14 das Druckmittel unter einem höheren Druck zur Verfügung zu stellen, bzw. ein Vorfüllen der Radbremsen 17,18 zu erreichen, ist eine Hilfsdruckquelle vorgesehen, die wirkungsmäßig zwischen dem Druckmittelvorratsbehälter 4 und dem Hauptbremszylinder 3 angeordnet ist. Die Hilfsdruckquelle ist bei dem gezeigten Ausführungsbeispiel durch eine durch einen Elektromotor 22 angetriebene Vorladepumpe 19 gebildet, deren Saugseite mit dem Druckmittelvorratsbehälter 4 in Verbindung steht und deren Druckseite an die Hauptbremszylinder - Druckraum 7 (Druckstangenkreis) angeschlossen ist. Die Vorladepumpe 19 erzeugt einen Druckmittelstrom, der über die Hauptbremszylinderausgänge, je nach der Schaltstellung der Ventile 9,10, entweder der Saugseite der Rückförderpumpe 14 oder direkt den Radbremsen 17,18 zugeführt wird. Der von der Vorladepumpe gelieferte Vorladedruck soll so hoch sein, daß er den den zweiten Druckraum 8 begrenzenden Hauptbremszylinderkolben gegen den Widerstand einer ihn entgegen der Betätigungsrichtung vorspannenden Rückstellfeder verschieben kann, um auch im zweiten Bremskreis II einen Vorladedruck zu erzeugen. Diese Anordnung hat unter anderem den Vorteil, daß in den zweiten Druckraum 8 nur das Druckmittelvolumen eingespeist wird, welches dem Hub des den zweiten Druckraum 8 begrenzenden Kolbens entspricht. Dies hat ein besseres bzw. angenehmeres Pedalgefühl zur Folge.

Wenn im Fahrzeug nur eine Achse mit hoher Systemdynamik erforderlich ist, kann die erwähnte Vorladepumpe so ausgelegt werden, daß der von ihr aufgebrachte Druck gerade so hoch ist, daß keine Verschiebung des Sekundärkolbens und demnach kein Vorladedruckaufbau im zweiten Bremskreis stattfindet.

Die Vorladepumpe kann als Kreisel-, Flügelzellen-, Zahnrad- oder Kolbenpumpen ausgeführt und im Druckmittelsvorratsbehälter 4, im Hauptbremszylinder 3 oder zwischen Druckmittelvorratsbehälter 4 und Hauptbremszylinder 3 angeordnet sein. Als Antriebe kommen außer dem bereits erwähnten Elektromotor 22 noch sowohl hydraulische als auch pneumatische Antriebszylinder in Frage.

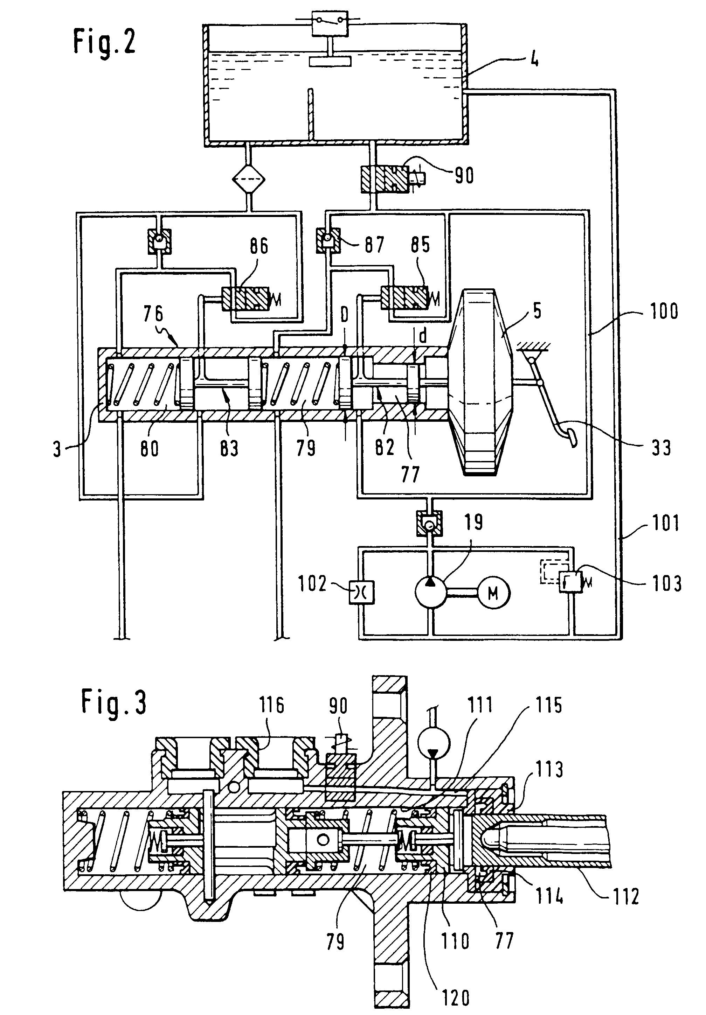

Wie der Fig. 2 zu entnehmen ist, weist der Hauptbremszylinder 3 zwei Arbeitskammern 79,80 auf, die durch einen Schwimmkolben 83 voneinander getrennt sind. Der Druckstangenkolben 82, der unmittelbar vom Unterdruckbremskraftverstärker 5 bzw. dem Pedal 33 angetrieben wird, ist gestuft ausgeführt, so daß ein Nachlaufraum 77 gebildet ist. Der Druckstangenkolben 82 grenzt mit einer Fläche mit dem Durchmesser D an die eine Arbeitskammer 79, während die Fläche des Druckstangenkolben 82, die von der Arbeitskammer 79 abgewandt ist, einen Durchmesser d aufweist. Der Nachlaufraum 77 weist damit eine wirksame Fläche auf, die sich aus der Subtraktion der beiden eben genannten Flächen ergibt. Der Druck im Nachlaufraum 77 wirkt auf diese wirksame Fläche und treibt den Druckstangenkolben in Richtung auf die Arbeitskammer 79.

Der Nachlaufraum 77 ist über eine Leitung 100 mit dem Vorratsbehälter 4 verbunden. Außerdem besteht eine Verbindung zwischen dem Nachlaufraum und der einen Arbeitskammer 79 sowohl über ein Zentralventil 85, als auch über ein Rückschlagventil 87. Das Zentralventil 85 ist so angeordnet, daß es sich bei einer Bewegung des Druckstangenkolbens 82 in Betätigungsrichtung schließt.

An den Nachlaufraum 77 schließt außerdem die schon erwähnte Vordruckpumpe 19 an, deren Saugleitung 101 unmittelbar mit dem Vorratsbehälter 4 verbunden ist. Um zu verhindern, daß Druckmittel, das von der Pumpe 19 gefördert wird, wieder in den Vorratsbehälter 4 gelangt, ist ein Sperrventil oder Vorlade-ventil 90 zwischen dem Vorratsbehälter 4 und dem Nachlaufraum 77 vorgesehen. Der Druck am Ausgang der Nachlaufpumpe 19 kann auf verschiedene Weise begrenzt werden, entweder über eine Drossel 102 oder ein Druckbegrenzungsventil 103. Dieses Druckbegrenzungsventil 103 kann entweder einen festen Umschaltpunkt aufweisen, also einen festen Druck am Ausgang der Pumpe einstellen oder aber, was hier nicht näher dargestellt ist, vom Hauptzylinderdruck angesteuert werden, und zwar derart, daß der Druck am Ausgang der Vorladepumpe nicht größer werden kann als der Hauptzylinderdruck.

Die Fig. 3 zeigt die Ausführung eines geeigneten Hauptzylinders. Der Druckstangenkolben ist gestuft ausgeführt, und weist einen Kopf 110 auf, der in der Bohrung 111 des Hauptzylindergehäuses geführt ist. Ein aus dem Hauptzylindergehäuse 111 herausgeführter Schaft 112 weist einen kleineren Durchmesser auf als der Kopf des Druckstangenkolbens. Am Ende des Hauptzylindergehäuses ist ein Ringverschlußteil 113 mit einer Dichtung 114 vorgesehen, in der der Schaft 112 dichtend geführt wird. Zwischen dem rückwärtigen Ende des Kopfes 110 und dem Verschlußteil 113 ist der Ringraum 77 ausgebildet, der über einen Kanal 115, der der Leitung 100 entspricht, mit dem Anschlußstutzen 116 für den Vorratsbehälter 4 verbunden ist. In diese Leitung ist im Gehäuse des Hauptbremszylinders das Vorladeventil 90 eingefügt. Die Vorladepumpe 19 schließt über eine Querbohrung an den Kanal 115 an.

Das Zentralventil 85 wird gebildet durch einen Stößel im Druckstangenkolben, der an einem Ventilsitz anliegt und von einem Querglied in der Grundstellung des Kolbens in Offenstellung gehalten wird. Das Rückschlagventil 87 ist als Dichtmanschette 120 ausgebildet.

Die Anlage arbeitet wie folgt. In all den Fällen, in denen ein Bremsdruck in den Bremskreisen aufgebaut werden muß, ohne daß das Pedal 33 betätigt wird, wird die Vorladepumpe 19 eingeschaltet und das Vorladeventil 90 geschlossen. Gleichzeitig wird das Trennventil 10 in den Bremsleitungen gesperrt, sowie das elektronische Umschaltventil 9 geöffnet, so daß Druckmittel, das von der Vorladepumpe 19 in den Bremskreis gefördert wird, zur Saugseite der Rückförderpumpe 14 gelangt. Diese fördert das Druckmittel zu den angeschlossenen Radbremsen, in denen ein Druck aufgebaut werden kann, der mittels der Ein- und Auslaßventile den jeweiligen Regelalgorithmen angepaßt eingestellt wird.

Bei einer Bremsbetätigung durch den Fahrer kann sowohl eine Vorladung der Bremskreise als auch eine ausschließliche Bremskraftverstärkung erfolgen. Eine Vorladung kann insbesondere auch dann vorgesehen sein, wenn die Möglichkeit besteht, die Absicht des Fahrers, eine Bremsung einzuleiten, zu ermitteln, bevor dieser das Bremspedal betätigt. Wird eine solche Absicht festgestellt, wird die Vorladepumpe 19 eingeschaltet und das Vorladeventil 90 gesperrt. Nun dringt Bremsflüssigkeit über das offene Zentralventil 85 sowie das Rückschlagventil 87 in die Bremskreise. Dies führt zu einer Überwindung der systemimmanenten Leerwege. Durch die Pedalbetätigung wird der Druckstangenkolben 82 verschoben, wodurch das Zentralventil 85 geschlossen wird. Dadurch wird in dem Druckstangenbremskreis 79 ein Druck aufgebaut, der im allgemeinen größer ist als der Druck, der von der Vorladepumpe 19 zur Verfügung gestellt wird. Der Druck der Vorladepumpe ist aber weiterhin im Nachlaufraum 77 wirksam, so daß dieser bezogen auf die wirksame Fläche, eine zusätzliche Betätigungskraft auf den Druckstangenkolben ausübt, der zu einer Druckerhöhung in den Bremskreisen führt. Um sicherzustellen, daß in dieser Phase kein zusätzliches Druckmittel in die Bremskreise gelangt, können Mittel vorgesehen werden, mit denen der Druck der Vorladepumpe auf den Druck in den Bremskreisen beschränkt wird. Dies kann mittels eines vom Hauptzylinderdruck gesteuerten Druckbegrenzungsventils erfolgen, das am Ausgang der Vorladepumpe dafür sorgt, daß der Vorladedruck nicht größer wird als der Hauptbremszylinderdruck.

Die Vorladepumpe kann somit multifunktionell eingesetzt werden: Einerseits kann sie in den Fällen, in denen ein Bremsdruck in den Bremskreisen aufgebaut werden muß, ohne daß eine Pedalbetätigung erfolgt, das notwendige Druckmittelvolumen zur Verfügung stellen. Auf der anderen Seite kann sie bei einer Pedalbetätigung einen Druck im Nachlaufraum zur Verfügung stellen, der eine Verstärkung der Pedalkraft bewirkt. Dies kann ungeregelt erfolgen, nämlich in all den Fällen, in denen aufgrund besonderer Signale festgestellt werden kann, daß der Fahrer eine rasche Bremsung durchführen möchte. Dies kann aber auch geregelt erfolgen, indem z.B. der Druck am Ausgang der Vorladepumpe auf den Hauptzylinderdruck oder nur wenig darunter eingestellt wird.

Wichtige Aspekte der Erfindung sind darin zu sehen, daß bei Bedarf einer zusätzlichen Bremskraftunterstützung des pneumatischen Bremskraftverstärkers 5 die Vorladepumpe 19 angestellt und das Vorlade-Ventil im Nachlaufbereich geschlossen wird.

Durch Druckaufbau im Nachlaubereich und unter Berücksichtigung des Flächenverhältnis wird eine hydraulische Unterstützungskraft auf dem Druckstangenkolben 110 wirksam. Dadurch läßt sich ein hydraulischer Bremsassistent verwirklichen. Die Druckregelung kann hierbei über getaktete Pumpenansteuerung oder Taktung des Vorladeventils 90 erfolgen. Zusätzlich kann, bei Systemen mit Antriebsschlupfregelung und Fahrdynamikregelung eine weitere Druckerhöhung in Kombination mit der Vorladepumpe 19 durch das Öffnen des Schaltventils 9 und Druckaufbau über die Rückförderpumpe 14 in den Radbremsen 17,18 ermöglicht werden.

Generell kann bei Vorhandensein einer Vorladepumpe 19 der Bremskraftverstärker 5 kleiner ausgeführt werden und die Vorladepumpe 19 bei Bedarf zur Servounterstützung angesteuert werden. Daneben ist die Kombination Panik-Bremshilfe in Kombination mit einem standardmäßigen Bremsdruckverstärker 5 möglich.

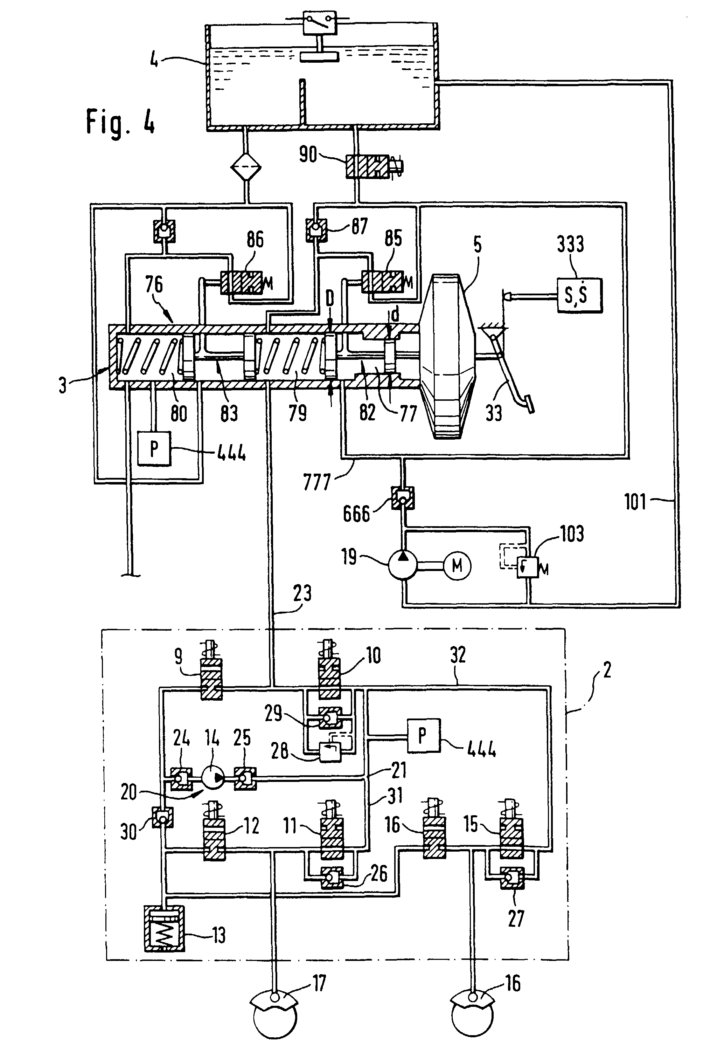

Anhand den nachfolgenden Abbildungen gemäß den Fig. 4 bis 7 werden verschiedene Ansteuermöglichkeiten zum Betrieb der hydraulischen Bremsanlage mit einer hydraulischen Bremsassistentenfunktion erläutert.

Die Figur 4 zeigt hierzu eine Kombination der aus den zuvor in den Figuren 1 und 2 beschriebenen und damit bekannten Elementen. Gleichfalls unter Bezugnahme auf die vorangegangenen Beschreibungsteile zur hydraulischen Bremsassistentenfunktion, wie unter anderem auf der Beschreibungsseite 12, 2. Absatz zusammenfassend ausgeführt wurde, wird nunmehr anhand von Beispielen gezielt auf die notwendige Sensorik für das Ansteuerverfahren des hydraulischen Bremsassistenten eingegangen.

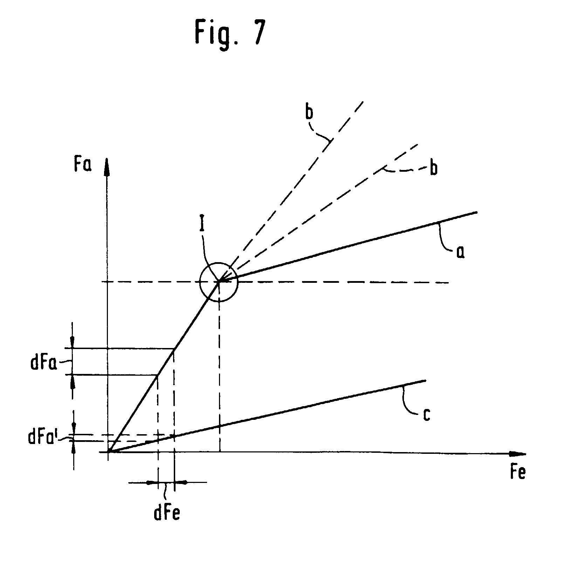

Hierzu bedarf es der Erfassung der Bewegungscharakteristik des Bremspedals 33, vorzugsweise mittels eines Wegsensors 333 und Feststellung des jeweils im Hydraulikkreis anstehenden Drucks, vorzugsweise mittels an der Arbeitskammer 80 und der Pumpendruckleitung 21 angeordneten Drucksensoren 444. Die daraus resultierenden Sensorsignale führen in Abhängigkeit von der gleichfalls in einem Rechner, vorzugsweise im ABS-Steuergerät, erfaßten Fahrgeschwindigkeit des Fahrzeugs, beim Erkennen einer Panikbremsung durch den Rechner, zur Schließstellung des Vorladeventils 90 sowie zu einer Aktivierung der Vorladepumpe 19, womit sich ein zur Pedalkraft addierender Betätigungsdruck im Hauptbremszylinder 3 aufbaut. Dies ist unter anderem in der Figur 7 graphisch verdeutlicht. Durch diesen erhöhten Betätigungsdruck wird erreicht, daß das Bremsdruckniveau in den Radbremszylindern 17,18 möglichst nahe an den Blockierdruck herangeführt werden kann. Dies führt zu einem möglichst kurzen Bremsweg, ohne eine Notwendigkeit zur zusätzlichen Pedalkraftsteigerung.

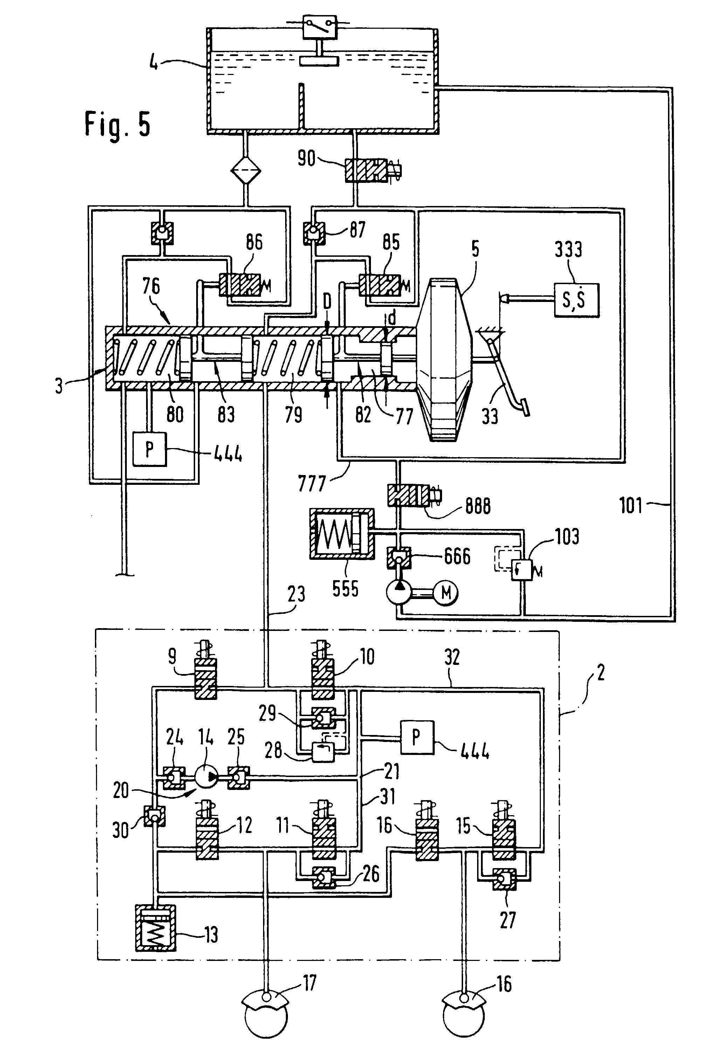

Eine zweckmäßige Ausgestaltung der zu Fig. 4 erläuterten Funktionsweise geht aus der Darstellung gemäß Figur 5 hervor. Diese sieht vor, zum Zwecke eines möglichst reaktionsschnellen Ansprechverhaltens der zu Fig. 4 beschriebenen hydraulischen Bremsassistentenfunktion, einen Hochdruckspeicher 555 an der Druckseite der Vorladepumpe 19 und zwar zwischen dem Rückschlagventil 666 und einem an die Ladeleitung 777 angeschlossenen Trennventil 888, anzuschließen. Das Trennventil 888 ist vorzugsweise als elektromagnetisch betätigbares, in Grundstellung geschlossenes 2/2-Wegeventil ausgebildet, das entsprechend den vorangegangenen Erläuterungen zur Fig. 4, im Falle einer Aktivierung zusätzlich elektromagnetisch geöffnet wird, um das Volumen im vorgeladenen Hochdruckspeicher 555 in die am Nachlaufraum 77 angeschlossene Ladeleitung 888 einströmen zu lassen. Der andere Endabschnitt der Ladeleitung 888 ist durch das elektromagnetisch gesperrte Vorladeventil 90 vom Druckmittelvorratsbehälter 4 getrennt.

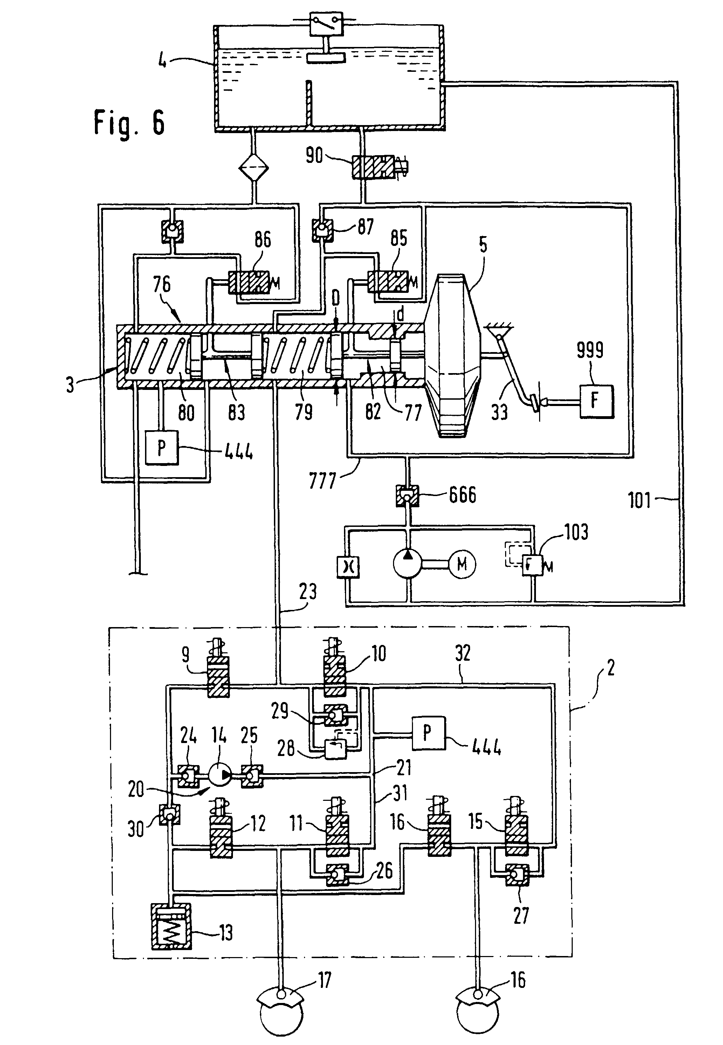

Die Fig. 6 zeigt auf Basis des bereits eingehend beschriebenen Bremsanlagenaufbaus eine Ausführungsvariante, die sich von den Bremsanlagen nach Fig. 4 und 5 dadurch unterscheidet, daß anstelle eines Wegsensors ein Kraftsensor 999 die auf das Bremspedal 33 ausgeübte Fußkraft erfaßt und mit der nicht mehr korrelierenden Druckerhöhung im Bremskreis unter weiterem Kraftanstieg jeder Fußkraft in einem Rechner, vorzugsweise im ABS-Steuergerät, verglichen wird, um den Aussteuerpunkt des pneumatischen Bremskraftverstärkers 5 zu ermitteln. Beim Erreichen des Aussteuerpunktes wird die Vorladepumpe 19 behutsam aktiviert, um ein komfortables Pedalgefühl zu erzielen. Der Druckabbau im Nachlaufraum 77 läßt sich wie bei allen voran beschriebenen Ausführungsbeispielen über die Deaktivierung des Vorladeventils 90 bewerkstelligen. Ferner kann es bei Bedarf die Funktion des Druckbegrenzerventils 103 übernehmen.

Dieses Ausführungsbeispiel findet vor allem Anwendung für besonders kleinbauende pneumatische Bremskraftverstärker 5, um entweder zur pneumatischen Verstärkung eine zusätzliche hydraulische Verstärkung mittels der Vorladepumpe 19 und/oder einem Hochdruckspeicher 555 zu bewirken oder um ein durch Vakuumdefizit hervorgerufenes pneumatisches Verstärkungsdefizit mittels hydraulischer Verstärkungswirkung der Vorladepumpe 19 und/oder einem Hochdruckspeicher 555 auszugleichen.

Die Fig. 7 zeigt unter Bezug auf die Darstellung nach Fig. 6 ein Kräftediagramm, in dem die Kennlinie a des pneumatischen Bremskraftverstärkers 5 als auch eine um die hydraulische Verstärkerkennlinie b erweiterte Darstellung der Kennlinie a gezeichnet ist. Der über der Ordinate aufgetragene Kraftanstieg dFa der Aussteuerkraft Fa als auch der über die Abszisse aufgetragene Kraftanstieg dFe der Einsteuerkraft Fe, die durch die Fußkraft erzeugt wird, lassen sich mittels der voran beschriebenen Drucksensoren 444 feststellen und mit den Werten des Kraftsensors 999 am Pedal vergleichen, so daß bei einem relativ kleinen Kraftanstiegsverhältnis dFa/dFe der gewünschte Aussteuerpunkt I des pneumatischen Bremskraftverstärkers 5 erreicht wird, bei dem die hydraulische Zusatzverstärkung (Kennlinie b) durch die Vorladepumpe 19 eingestellt wird. Gleiches gilt auch bei einem Ausfall des Vakuums. Solange das Kraftanstiegsverhältnis dFa/dFe dem gewünschten Sollwert entspricht, erfolgt jedoch keine hydraulische Zusatzverstärkung mittels der Vorladepumpe 19. Der vollständige Ausfall des pneumatischen Bremskraftverstärkers 5 ist überdies im Diagramm anhand der Kennlinie c ergänzend aufgezeigt.

Soweit bezüglich aller in den Fig. 4 bis 6 gezeigten Elemente nicht im einzelnen eingegangen wurde, entsprechen diese den Ausführungen gemäß den Fig. 1 bis 3.

## Patentansprüche

1. Hydraulische Bremsanlage mit einem pedalbetätigten Hauptbremszylinder (3) mit einen Arbeitsraum (7,79), der mit dem Bremskreis (I) in Verbindung steht und der von einem Druckstangenkolben (82) begrenzt wird, wobei eine Wirkfläche, bestehend aus der Differenz des Druckstangenkolbenquerschnitts und des Kolbenschaftquerschnitts, einem Nachlaufraum (77) zugewandt ist, welcher über ein Vorladeventil (90) mit dem Druckmittelvorratsbehälter (4) des Hauptbremszylinders (3) und über ein Zentralventil (85) mit dem Arbeitsraum (7,79) des Hauptbremszylinders in Verbindung steht, und mit einer Pumpe (19) für eine Antischlupfregelung, die in den Nachlaufraum (77) fördert, und mindestens einem Bremskreis (I) , in den mindestens eine Radbremse integriert und der an den Arbeitsraum (7,79) des Hauptbremszylinders (3) angeschlossen ist, dadurch **gekennzeichnet**, daß die Pumpe (19) eine Vorladepumpe ist, und daß die Vorladepumpe (19) zur Pedalkraftverstärkung spätestens mit Beginn einer Pedalbetätigung eingeschaltet wird, wobei der auf die Wirkfläche einwirkende Vorladepumpendruck eine Pedalkraftverstärkung erzeugt.

2. Hydraulische Bremsanlage nach Anspruch 1, dadurch **gekennzeichnet**, daß der Bremskreis (I) mit einer Rückförderpumpe (14) und Ventilen (11,12,15,16) zur Regelung des Radbremsdruckes versehen ist sowie einem elektronischen Regler, der in den Fällen, in denen ein Bremsdruck in den Bremskreisen (I,II) unabhängig von einer Pedalbetätigung aufgebaut werden soll, mindestens die Vorladepumpe (19) einschaltet.

3. Hydraulische Bremsanlage nach Anspruch 1 oder 2, dadurch **gekennzeichnet**, daß parallel zur Vorladepumpe (19) ein Vorladeventil (90) geschaltet ist.

4. Hydraulische Bremsanlage nach Anspruch 1, dadurch **gekennzeichnet**, daß ein Druckbegrenzungsventil (103) vorgesehen ist, das den Druck am Ausgang der Vorladepumpe begrenzt.

5. Bremsanlage nach Anspruch 1, dadurch **gekennzeichnet**, daß der Druck der Vorladepumpe (19) durch Ansteuerung des Vorladeventils (90) geregelt wird.

6. Bremsanlage nach Anspruch 1, dadurch **gekennzeichnet**, daß zur Erfassung der Pedalbetätigung ein Sensor, vorzugsweise ein Wegsensor (333) und/oder ein Kraftsensor (999) vorgesehen ist.

7. Bremsanlage nach Anspruch 1, dadurch **gekennzeichnet**, daß zur Erfassung des Drucks im Bremskreis (I) wenigstens ein Drucksensor (444) vorgesehen ist.

8. Verfahren zum Betrieb einer hydraulische Bremsanlage mit einem pedalbetätigten Hauptbremszylinder (3) mit einen Arbeitsraum (7,79), der mit dem Bremskreis (I) in Verbindung steht und der von einem Druckstangenkolben (82) begrenzt wird, wobei eine Wirkfläche, bestehend aus der Differenz des Druckstangenkolbensquerschnitts und des Kolbenschaftquerschnitts, einem Nachlaufraum (77) zugewandt ist, welcher über ein Vorladeventil (90) mit dem Druckmittelvorratsbehälter (4) des Hauptbremszylinders (3) und über ein Zentralventil (85) mit dem Arbeitsraum (7,79) des Hauptbremszylinders (3) in Verbindung steht, und mit einer Pumpe (19) für eine Antischlupfregelung, die in den Nachlaufraum (77) fördert, und mindestens einem Bremskreis (I) , in den mindestens eine Radbremse integriert und der an den Arbeitsraum (7,79) des Hauptbremszylinders (3) angeschlossen ist, dadurch **gekennzeichnet**, daß die Pumpe (19) eine Vorladepumpe ist, daß die Bewegungscharakteristik des Bremspedals (33), vorzugsweise mittels eines Wegsensors (333) oder einem Kraftsensor (999), und der Hydraulikdruck im Bremssystem mittels Drucksensoren (444) erfaßt wird, daß die Weg- mit der Druckcharakteristik in einem Rechner, vorzugsweise einem ABS-Steuergerät, mit Signalen der Fahrzeugfahrgeschwindigkeit verglichen wird, wobei beim Erkennen einer Panikbremsung aus vorgenannten Signalen durch Aktivieren der Vorladepumpe (19) und des Vorladeventils (90), wodurch eine Druckbeaufschlagung der Wirkfläche erfolgt, eine hydraulische Bremsassistentenfunktion einsetzt.

9. Verfahren nach Anspruch 8, dadurch **gekennzeichnet**, daß die auf das Bremspedal (33) ausgeübte Fußkraft mittels des Kraftsensors (999) erfaßt und mit einer nicht korrelierenden Druckerhöhung im Bremskreis unter weiterem Kraftanstieg der Fußkraft in einem Rechner, vorzugsweise im ABS-Steuergerät, zur Ermittlung des Aussteuerpunktes (I) des pneumatischen Bremskraftverstärkers (5) verglichen wird, wobei beim Erreichen des Aussteuerpunktes (I) die Vorladepumpe (19) aktiviert wird.

## Claims

1. A hydraulic brake system comprising a pedal-actuated master brake cylinder (3) including a working chamber (7,79) in communication with the brake circuit (I) and confined by a push rod piston (82), with an effective face consisting of the difference between the cross-section of the push rod piston and the cross-section of the piston shaft facing an intake chamber (77) which, by way of a pre-loading valve (90), is in communication with the pressure fluid reservoir (4) of the master brake cylinder (3) and, by way of a central valve (85), is in communication with the working chamber (7,79) of the master brake cylinder, and comprising a pump (19) for anti-slip control, delivering fluid into the intake chamber (77), and at least one brake circuit (I) into which is integrated at least one wheel brake and which is connected to the working chamber (7,79) of the master brake cylinder (3),
characterized in that the pump (19) is a pre-loading pump, and in that the pre-loading pump (19) for boosting the pedal force is actuated upon commencement of a pedal actuation at the latest, with the pre-loading pump pressure acting upon the effective face generating a boosted pedal force.

2. A hydraulic brake system according to claim 1,
characterized in that the brake circuit (I) is provided with a return pump (14) and valves (11,12,15,16) for controlling the wheel brake pressure, and with an electronic controller which actuates at least the pre-loading pump (19) in all cases in which a brake pressure is to be generated in the brake circuits (I, II) independently of a pedal actuation.

3. A hydraulic brake system according to claims 1 or 2,
characterized in that a pre-loading valve (90) is connected in parallel to the pre-loading pump (19).

4. A hydraulic brake system according to claim 1,
characterized in that a pressure limiting valve (103) is provided which limits the pressure at the output of the pre-loading pump.

5. A brake system according to claim 1,
characterized in that the pressure of the pre-loading pump (19) is controlled by actuating the pre-loading valve (90).

6. A brake system according to claim 1,
characterized in that for determining the pedal actuation, a sensor, preferably, a way-sensor (333) and/or a force-sensor (999), is/are provided.

7. A brake system according to claim 1,
characterized in that at least one pressure sensor (444) is provided for determining the pressure prevailing in the brake circuit (I).

8. A process for operating a hydraulic brake system comprising a pedal-actuated master brake cylinder (3) which includes a working chamber (7,79) in communication with the brake circuit (I) and confined by a push rod piston (82), with an effective face consisting of the difference between the cross-section of the push rod piston and the cross-section of the piston shaft facing an intake chamber (77) which, by way of a pre-loading valve (90), is in communication with the pressure fluid reservoir (4) of the master brake cylinder (3) and, by way of a central valve (85), is in communication with the working chamber (7,79) of the master brake cylinder (3), and comprising a pump (19) for anti-slip control, delivering fluid into the intake chamber (77), and comprising at least one brake circuit (I) into which is integrated at least one wheel brake and which is in communication with the working chamber (7,79) of the master brake cylinder (3),
characterized in that the pump (19) is a pre-loading pump, and in that the motion characteristic of the brake pedal (33) is determined preferably by a way sensor (333) or a force sensor (999), and the hydraulic pressure in the brake system is determined by means of pressure sensors (444), in that the way characteristic with the pressure characteristic, in a computer, preferably an anti-lock control unit, is compared to signals of the driving speed of the automotive vehicle, with a hydraulic brake assist function being initiated once a panic deceleration is detected from the said signals, by actuating the pre-loading pump (19) and a pre-loading valve (90) whereby the effective surface is pressurized.

9. A process according to claim 8,
characterized in that the pedal force exerted upon the brake pedal (33) is determined by means of the force sensor (999) and compared in a computer, preferably in the anti-lock control unit, to a non-correlating pressure increase within the brake circuit under an additionally boosted pedal force, for determining the point of maximum boosting (I) of the pneumatic brake force booster (5), with the pre-loading pump (19) being activated upon reaching of the point of maximum boosting (I).

## Revendications

1. Système de freinage hydraulique, avec un maître-cylindre de frein (3) actionné par pédale et doté d'une chambre de travail (7, 79) qui est reliée au circuit de frein (I) et délimitée par un piston à tige de pression (82), une surface active, constituée de la différence de la section du piston à tige de pression et de la section du corps de piston, étant tournée vers une chambre de poursuite (77) qui est reliée par l'intermédiaire d'une soupape de précharge (90) au réservoir de fluide hydraulique (4) du maître-cylindre de frein (3) et par l'intermédiaire d'une soupape centrale (85) à la chambre de travail (7, 79) du maître-cylindre de frein, et avec une pompe (19) pour une régulation antipatinage qui refoule le fluide dans la chambre de poursuite (77), et au moins un circuit de frein (I) dans lequel est intégré au moins un frein de roue et qui est raccordé à la chambre de travail (7, 79) du maître-cylindre de frein (3), **caractérisé** en ce que la pompe (19) est une pompe de précharge, et en ce que la pompe de précharge (19) est enclenchée au plus tard au début d'un actionnement de la pédale afin d'amplifier la force de pédale, la pression de la pompe de précharge agissant sur la surface active produisant une amplification de la force de pédale.

2. Système de freinage hydraulique selon la revendication 1, **caractérisé** en ce que le circuit de frein (I) est pourvu d'une pompe de refoulement (14) et de soupapes (11, 12, 15, 16) pour réguler la pression de frein de roue, ainsi que d'un régulateur électronique qui, dans les cas où il faut établir une pression de freinage dans les circuits de frein (I, II) indépendamment d'un actionnement de la pédale, enclenche au moins la pompe de précharge (19).

3. Système de freinage hydraulique selon la revendication 1 ou 2, **caractérisé** en ce qu'une soupape de précharge (90) est montée parallèlement à la pompe de précharge (19).

4. Système de freinage hydraulique selon la revendication 1, **caractérisé** en ce qu'il est prévu une soupape de limitation de pression (103), qui limite la pression à la sortie de la pompe de précharge.

5. Système de freinage hydraulique selon la revendication 1, **caractérisé** en ce que la pression de la pompe de précharge (19) est régulée par asservissement de la soupape de précharge (90).

6. Système de freinage hydraulique selon la revendication 1, **caractérisé** en ce qu'un capteur, de préférence un capteur de déplacement (333) et/ou un capteur de force (999) est prévu pour détecter l'actionnement de la pédale.

7. Système de freinage hydraulique selon la revendication 1, **caractérisé** en ce qu'au moins un capteur de pression (444) est prévu pour détecter la pression dans le circuit de frein (I).

8. Procédé de fonctionnement d'un système de freinage hydraulique avec un maître-cylindre de frein (3) actionné par pédale et doté d'une chambre de travail (7, 79) qui est reliée au circuit de frein (I) et délimitée par un piston à tige de pression (82), une surface active, constituée de la différence de la section du piston à tige de pression et de la section du corps de piston, étant tournée vers une chambre de poursuite (77) qui est reliée par l'intermédiaire d'une soupape de précharge (90) au réservoir de fluide hydraulique (4) du maître-cylindre de frein (3) et par l'intermédiaire d'une soupape centrale (85) à la chambre de travail (7, 79) du maître-cylindre de frein (3), et avec une pompe (19) pour une régulation antipatinage qui refoule le fluide dans la chambre de poursuite (77), et au moins un circuit de frein (I) dans lequel est intégré au moins un frein de roue et qui est raccordé à la chambre de travail (7, 79) du maître-cylindre de frein (3), **caractérisé** en ce que la pompe (19) est une pompe de précharge, en ce qu'on détecte la caractéristique de déplacement de la pédale de frein (33), de préférence au moyen d'un capteur de déplacement (333) ou d'un capteur de force (999), et la pression hydraulique dans le système de freinage au moyen de capteurs de pression (444), et en ce que la caractéristique de déplacement et de pression est comparée dans un calculateur, de préférence un appareil de commande d'ABS, à des signaux de la vitesse de marche du véhicule, une fonction d'assistance hydraulique de freinage intervenant si l'on décèle d'après ces signaux un freinage d'urgence, fonction qui intervient par activation de la pompe de précharge (19) et de la soupape de précharge (90), de sorte que la surface active est sollicitée en pression.

9. Procédé selon la revendication 8, **caractérisé** en ce que la force exercée sur la pédale de frein (33) est détectée au moyen du capteur de force (999), et comparée dans un calculateur, de préférence dans l'appareil de commande d'ABS, à une augmentation non corrélée de pression dans le circuit de frein tandis que la force exercée sur la pédale continue d'augmenter, cette comparaison s'effectuant afin de déterminer la limite d'asservissement (I) de l'amplificateur de frein pneumatique (5), la pompe de précharge (19) étant activée à l'atteinte de la limite d'asservissement (I).
